(19)

Europäisches
Patentamt
European
Patent Office
Office européen
des brevets

(11) **EP 1 890 266 A1**

(12) **EUROPEAN PATENT APPLICATION**
published in accordance with Art. 153(4) EPC

(43) Date of publication:
**20.02.2008 Bulletin 2008/08**

(21) Application number: **06747019.5**

(22) Date of filing: **30.05.2006**

(51) Int Cl.:
***G06T 11/20*** *(2006.01)*

(86) International application number:
**PCT/JP2006/310791**

(87) International publication number:
**WO 2006/132112 (14.12.2006 Gazette 2006/50)**

(84) Designated Contracting States:
**DE FR GB IT**

(30) Priority: **06.06.2005 JP 2005165752**

(71) Applicant: **MATSUSHITA ELECTRIC INDUSTRIAL CO., LTD**
**Kadoma-shi, Osaka 571-8501 (JP)**

(72) Inventor: **IGUCHI, Hideyuki**
**c/o Matsushita Electric Industrial Co, Ltd**
**2-1-61 Shiromi, Chuo-ku**
**Osaka 540-6207 (JP)**

(74) Representative: **Grünecker, Kinkeldey,**
**Stockmair & Schwanhäusser**
**Anwaltssozietät**
**Maximilianstrasse 58**
**80538 München (DE)**

(54) **CURVE PLOTTING DEVICE, CURVE PLOTTING METHOD, PARKING SUPPORT DEVICE, AND VEHICLE**

(57)    To enable the drawing of a curve which is made to have an appropriate width to display scanning through a simple calculation process without using a frame buffer.

A coordinate calculating unit 2 calculates a coordinate to be drawn from an expression of an original curve inputted thereinto. A horizontal broadening unit 4 performs a calculation for horizontal broadening that is implemented on the original curve. A vertical broadening unit 5 performs a calculation for vertical broadening that is implemented on the original curve and conversion to a horizontal vector. A selecting unit 6 switches between the usage of a result of a calculation by the horizontal broadening unit 4 and the usage of a result of a calculation by the vertical broadening unit 5 based on an inclination of a tangent which is calculated in an inclination calculating unit 3. An output unit 8 outputs an image signal of each pixel to scanning of a display screen. With this configuration, it becomes possible to draw a curve which is made to have a width relative to an original curve.

*FIG. 1*

EP 1 890 266 A1

**Description**

<Technical Field>

The present invention relates to a curve drawing apparatus and curve drawing method for drawing a curve having a width relative to an arbitrary curve, and a parking support system and vehicle which utilize this curve drawing apparatus.

<Background Art>

As a conventional curve drawing apparatus, there is a curve drawing apparatus for drawing a straight line or a curve having a width by a method in which pixels are painted completely along a normal vector of a base line by a DDA (Digital Differential Analyzer) algorithm (refer to, for example Patent Document No. 1).
The conventional configuration had, however, a problem that a frame buffer was necessary for painting at the time of drawing a thick line. In contrast to this, when a thick line was drawn without using the frame buffer while scanning horizontally, a horizontal vector needed to be obtained. However, when drawing a curve, a calculation expression became complex, and troublesome and complicated processings needed to be carried out.
Patent Document No. 1: JP-A-8-279038

<Disclosure of the Invention>

<Problem that the Invention is to Solve>

The invention was made in view of the situations, and an object thereof is to provide a curve drawing apparatus and curve drawing method for drawing a curve made to have an appropriate width to display scanning through a simple calculation process without using a frame buffer.

<Means for Solving the Problem>

A curve drawing apparatus of the invention is such as to include a curve information obtaining unit for obtaining information on a curve to be drawn, a coordinate calculating unit for obtaining a coordinate to be drawn based on information on the curve, a horizontal broadening unit for implementing a horizontal broadening process relative to the coordinate of the curve, a vertical broadening unit for implementing a vertical broadening process relative to the coordinate of the curve, an inclination calculating unit for calculating an inclination of a tangent to the curve, a selecting unit for selecting and switching between a broadening by the horizontal broadening unit and a broadening by the vertical broadening unit based on the inclination of the tangent, and an output unit for outputting a result of the selection by the selecting unit as information for drawing the curve.
With this configuration, by broadening the curve by switching between the implementation of the horizontal broadening or the implementation of the vertical broadening on the curve based on the inclination of the tangent, it becomes possible to draw the curve made to have an appropriate width to display scanning through the simple calculation process without using the frame buffer.
In addition, a curve drawing apparatus of the invention is such as to include a curve information obtaining unit for obtaining information on a curve to be drawn, a coordinate calculating unit for obtaining a coordinate to be drawn based on information on the curve, a horizontal broadening unit for implementing a horizontal broadening process relative to the coordinate of the curve, a vertical broadening unit for implementing a vertical broadening process relative to the coordinate of the curve, an integrating unit for implementing the integration of broadening by the horizontal broadening unit and broadening by the vertical broadening unit, and an output unit for outputting a result of the integration by the integrating unit as information for drawing the curve.
With this configuration, by broadening the curve by integrating the horizontal broadening and the vertical broadening implemented on the curve, it becomes possible to draw the curve made to have an appropriate width to display scanning through the simple calculation process without using the frame buffer.
A curve drawing method of the invention is such as to have a step of obtaining information on a curve to be drawn, a step of obtaining a coordinate to be drawn based on information on the curve, a step of implementing a horizontal broadening process relative to the coordinate of the curve, a step of implementing a vertical broadening process relative to the coordinate of the curve, a step of calculating an inclination of a tangent to the curve, a step of selecting and switching between the horizontal broadening and the vertical broadening for implementation on the curve based on the inclination of the tangent, and a step of outputting a result of the selection by the selecting unit as information for drawing the curve.

With this configuration, by broadening the curve by switching between the implementation of the horizontal broadening or the implementation of the vertical broadening on the curve based on the inclination of the tangent, it becomes possible to draw the curve made to have an appropriate width to display scanning through the simple calculation process without using the frame buffer.

In addition, a curve drawing method of the invention is such as to have a step of obtaining information on a curve to be drawn, a step of obtaining a coordinate to be drawn based on information on the curve, a step of implementing a horizontal broadening process relative to the coordinate of the curve, a step of implementing a vertical broadening process relative to the coordinate of the curve, a step of integrating the horizontal broadening and the vertical broadening implemented on the curve, and a step of outputting a result of the integration as information for drawing the curve.

With this configuration, by broadening the curve by integrating the horizontal broadening and the vertical broadening implemented on the curve, it becomes possible to draw the curve made to have an appropriate width to display scanning through the simple calculation process without using the frame buffer.

In addition, the invention provides a parking support system including either of the curve drawing apparatuses which includes a state obtaining unit for obtaining a state of a vehicle, a traveling path drawing unit for drawing an estimated traveling path of the vehicle based on the state of the vehicle by the curve drawing apparatus, and a display unit for displaying the estimated traveling path.

Additionally, the invention provides a vehicle which installs thereon the parking support system.

<Advantage of the Invention>

According to the invention, it is possible to provide the curve drawing apparatus and method which enable the drawing of the curve made to have an appropriate width to display scanning through the simple calculation process without using the frame buffer, as well as the parking support system and the vehicle which utilize the curve drawing apparatus.

<Brief Description of the Drawings>

Fig. 1 is a block diagram which shows the configuration of a curve drawing apparatus according to a first embodiment of the invention.
Fig. 2 is an explanatory diagram of a drawing method in the curve drawing apparatus of the embodiment.
Fig. 3 is an explanatory diagram of a horizontal broadening method in the curve drawing apparatus of the embodiment.
Fig. 4 is an explanatory diagram of a vertical broadening method in the curve drawing apparatus of the embodiment.
Fig. 5 is an explanatory diagram which shows an output example of a drawing drawn in the curve drawing apparatus of the first embodiment.
Fig. 6 is a block diagram which shows the configuration of a curve drawing apparatus according to a second embodiment of the invention.
Fig. 7 is an explanatory diagram which shows an output example of a drawing drawn in the curve drawing apparatus of the second embodiment.
Fig. 8 is a block diagram which shows the configuration of a parking support system according to a third embodiment of the invention.

<Description of Reference Numerals>

1 parameter input unit;
2 coordinate calculating unit;
3 inclination calculating unit;
4 horizontal broadening unit;
5 vertical broadening unit;
6 selecting unit;
7 integrating unit;
8 output unit;
10 vehicle signal input unit;
11 curve drawing apparatus;
12 camera;

13 image signal processing unit;
14 display unit;
20 parking support system;
30 vehicle

<Best Mode for Carrying out the Invention>

(First Embodiment)

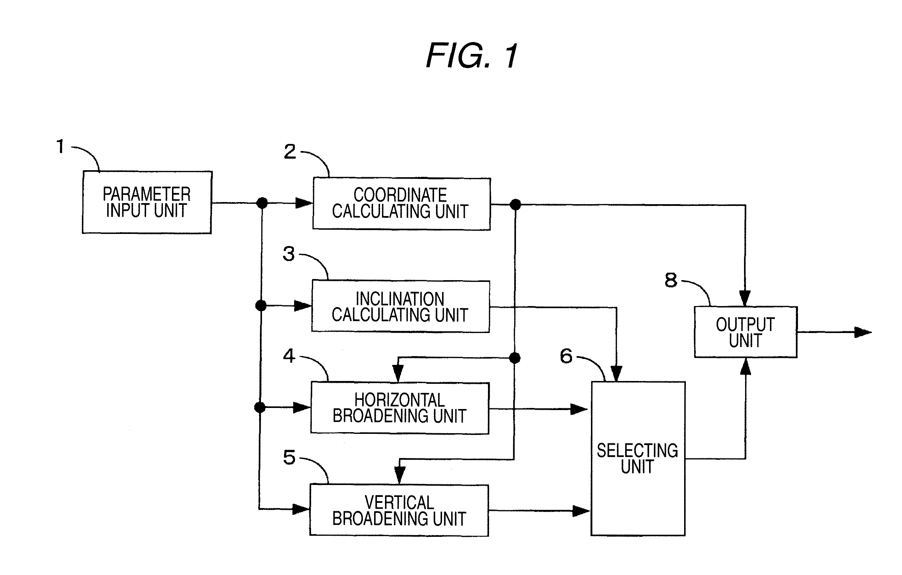

Fig. 1 is a block diagram which shows the configuration of a curve drawing apparatus according to a first embodiment of the invention. The curve drawing apparatus of the embodiment is made up of a parameter input unit 1, a coordinate calculating unit 2, an inclination calculating unit 3, a horizontal broadening unit 4, a vertical broadening unit 5, a selecting unit 6 and an output unit 8.

The parameter input unit 1 is such as to correspond to an example of the curve information obtaining unit and obtains information such as an expression of a curve, constants of the expression, a line number to be drawn and a width of the curve in relation to an original curve to hold or update the information. The coordinate calculating unit 2 calculates a coordinate to be drawn from the expression of the curve. The inclination calculating unit 3 calculates an inclination of a tangent to the curve. The horizontal broadening unit 4 implements a calculation of a horizontal width given to the curve. The vertical broadening unit 5 implements a calculation of a vertical width given to the curve, so as to be converted into a horizontal vector. The selecting unit 6 selectively switches between the usage of the result of a calculation by the horizontal broadening unit 4 and the usage of the result of a calculation by the vertical broadening unit 5 based on the inclination of the tangent calculated by the inclination calculating unit 3. The output unit 8 is such as to output an image signal for display, and outputs an image signal of each pixel to scanning of a display screen and implements a clipping processing which limits a drawing domain.

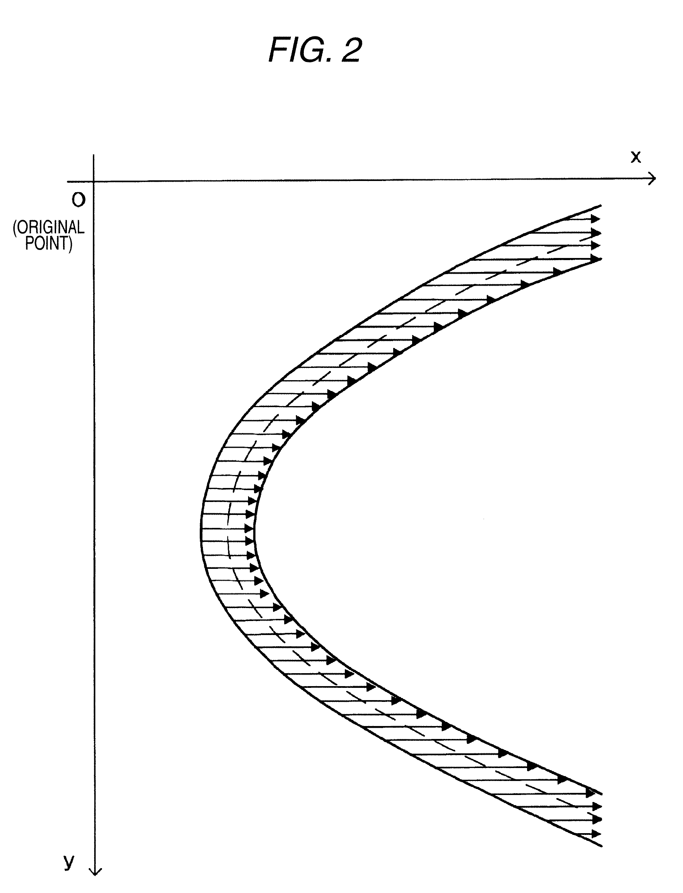

Next, the operation of the curve drawing apparatus of the first embodiment will be described using Fig. 2. In Fig. 2, an original point of a coordinate system lies in a top, left-hand side portion of a display screen. In addition, a horizontal direction is made to represent an $x$ axis, and a rightward direction is made to denote the positive. Additionally, a vertical direction is made to represent a $y$ axis, and a downward direction is made to denote the positive. Here, as to the y axis, it is defined vertically reversely to a coordinate system that is usually used in the field of mathematics.

Although the curve drawing apparatus of the invention is such as to draw a curve in synchronism with the scanning of a screen without using a frame buffer, the scanning of the screen is implemented such that scanning is started from the top left-hand side portion of the screen in a horizontal direction, and when the scanning reaches a right end of the screen, a horizontal scanning of the following row is performed. Because of this, also as to the drawing of a curve which is made to have a width, drawing is performed in the horizontal direction for each row. Rightward arrows in Fig. 2 are such as to denote horizontal vectors for drawing. As the whole of the screen, a curve made to have a width can be drawn by completely painting pixels within the horizontal vectors in a predetermined color.

A broken line in Fig. 2 is an initial curve (that is, an original curve) which is made to have no width. For example, as the original curve, a parabola (a quadratic curve) can be used which is expressed by an expression (1) below.

$$X = ay^2 + by + c \quad \ldots (1)$$

Initially, a calculation method of a starting point and a terminal point of a horizontal vector will be described. Here, the original curve is understood to be such as expressed by the expression (1) above. Here, a, b, c are constants, and values are given by the parameter input unit 1. Broadening by w for each side, hence 2w for both sides is implemented on this original curve.

Firstly, a horizontal broadening calculation process by the horizontal broadening unit 4 and a vertical broadening calculation process by the vertical broadening unit 5 are implemented individually.

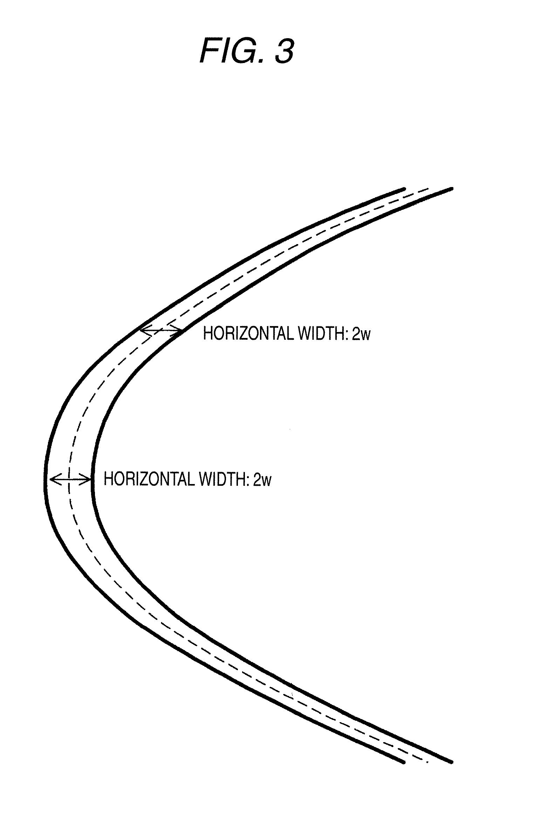

Fig. 3 shows a result of parallel shifts of the original curve by +/- $w$ in the horizontal direction, and individual curves are expressed by expressions:

$$x = ay^2 + by + c + w \quad \ldots (2)$$

$$x = ay^2 + by + c - w \qquad \ldots (3)$$

As this occurs, the horizontal broadening unit 4 executes the following operation. In a line in which $y = y_0$, a starting point and a terminal point of a horizontal vector for drawing are calculated in the following manner by the coordinate calculating unit 2.

$$X_1 = ay_0^2 + by_0 + c + w \qquad \ldots (4)$$

$$X_2 = ay_0^2 + by_0 + c - w \qquad \ldots (5)$$

From the expressions (4), (5), min $(x_1, x_2)$ is obtained as the starting point of the horizontal vector, and max $(x_1, x_2)$ is obtained as the terminal point of the horizontal vector, where min (m, n) means either of m and n whose value is smaller than that of the other, and max (m, n) means either of m and n whose value is larger than that of the other.

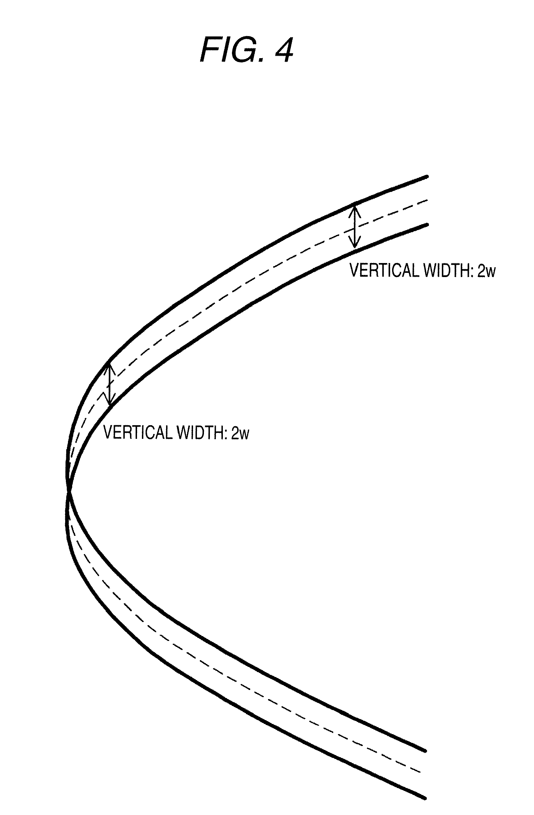

Fig. 4 shows a result of vertical shifts of the original curve by +/- *w* in the vertical direction, and individual curves are expressed by expressions:

$$x = a(y-w)^2 + b(y - w) + c \qquad \ldots (6)$$

$$x = a(y+W)^2 + b(y + w) + c \qquad \ldots (7)$$

As this occurs, the vertical broadening unit 5 executes the following operation. In a line in which $y = y_0$, a starting point and a terminal point of a horizontal vector for drawing are calculated in the following manner by the coordinate calculating unit 2.

$$X_3 = a(y_0 - w)^2 + b(y_0 - W) + c \qquad \ldots (8)$$

$$X_3 = a(y_0 + w)^2 + b(y_0 + W) + c \qquad \ldots (9)$$

From the expressions (8), (9), min $(x_3, x_4)$ is obtained as the starting point of the horizontal vector, and max $(x_3, x_4)$ is obtained as the terminal point of the horizontal vector.

Next, an inclination of a tangent to the original curve is obtained by the inclination calculating unit 3. The tangent to the original curve is expressed by the following expression (10) by differentiating the expression of the original curve.

$$dx/dy = 2ay + b \qquad \ldots (10)$$

An inclination of a tangent in a line in which $y = y_0$ which is calculated by the inclination calculating unit 3 becomes

$$dx/dy = 2ay_0 + b \qquad \ldots (11)$$

The selecting unit 6 selects the result of a horizontal broadening calculation when an absolute value of the inclination of the tangent is equal to or less than 1, whereas when the absolute value of the inclination of the tangent exceeds 1, the selecting unit 6 selects the results of a vertical broadening calculation, so as to produce a horizontal vector. Then, in the output unit 8, by implementing a process of painting completely pixels within the horizontal vector so produced in a predetermined color, as the whole of a screen for output image signals, a dummy curve of the width 2w can be drawn.

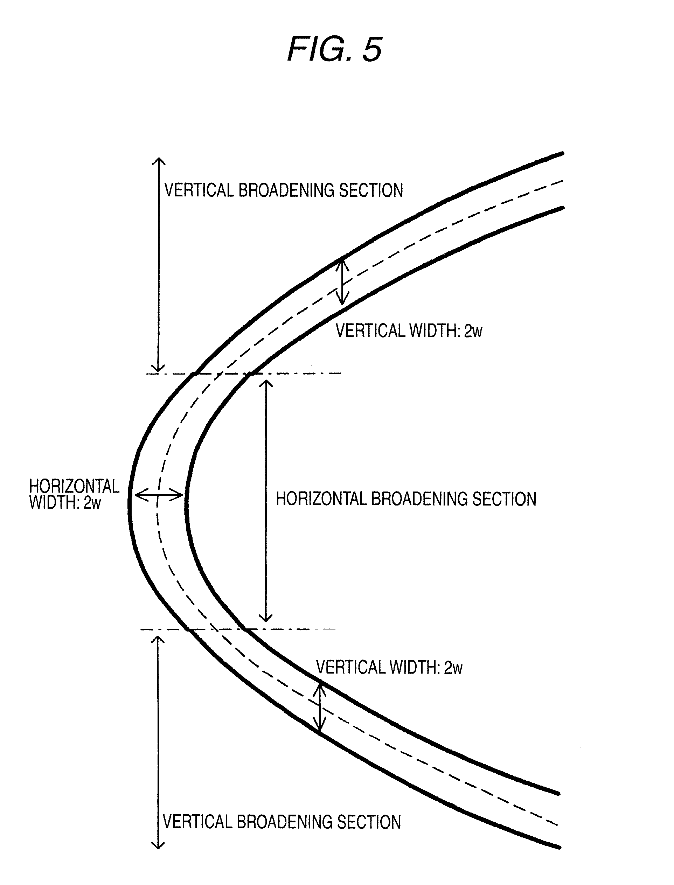

Fig. 5 is such as to show an output example of a drawing drawn by the curve drawing apparatus of the first embodiment. A curve which is made to have a width is displayed which is drawn by switching the horizontal broadening and the vertical broadening based on the inclinations of the tangents by supplying output image signals from the output unit 8 to a display unit, not shown, for display. Although only outer edges are shown for the purpose of explanation in Fig. 5, in the real world, pixels lying between two curves are pained completely, whereby a thick curve is displayed.

Thus, according to the curve drawing apparatus of the first embodiment, the curve which is made to have an appropriate width to display scanning can be drawn through the simple operation such as multiplication, addition and subtraction without using a frame buffer.

Note that while in the embodiment, the horizontal broadening amount and the vertical broadening amount are made the same, they can take values which are different from each other. In addition, the threshold for the inclination of the tangent which selects either of horizontal broadening and vertical broadening is not limited to 1 but can be set to other value in consideration of a ratio of horizontal broadening amount and vertical broadening amount, the properties of the original curve and the like. In this case, it is desirable to configure such that a boundary between a section where horizontal broadening is implemented and a section where vertical broadening is implemented is not disrupted.

In addition, while in the embodiment, the curve is described as being the parabola, the invention can be carried out similarly on an arbitrary curve which is expressed by a function which can define the inclination of a tangent.

(Second Embodiment)

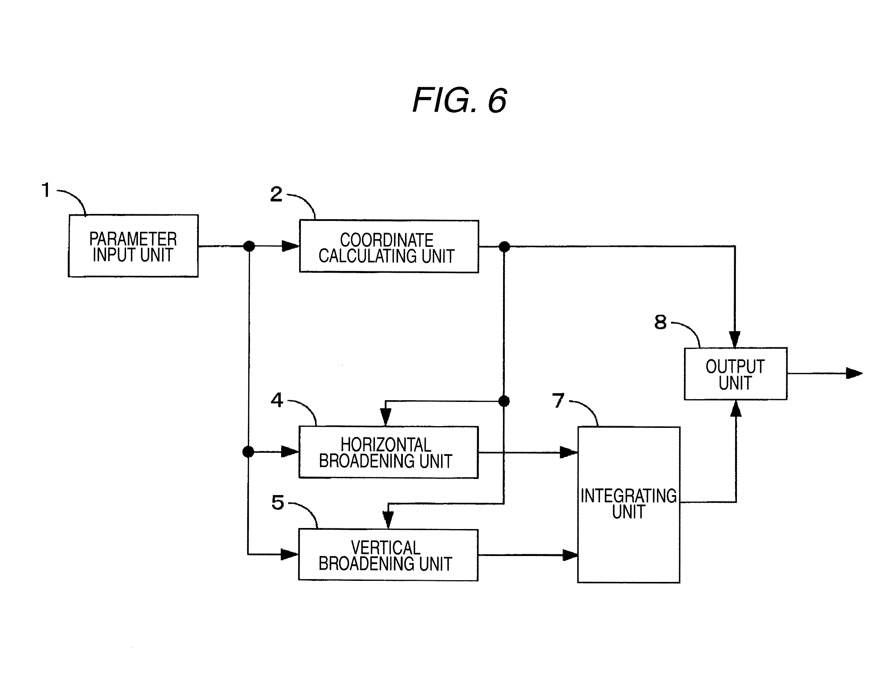

Fig. 6 is a block diagram which shows the configuration of a curve drawing apparatus according to a second embodiment of the invention. The curve drawing apparatus of the embodiment is made up of a parameter input unit 1, a coordinate calculating unit 2, a horizontal broadening unit 4, a vertical broadening unit 5, an integrating unit 6 and an output unit 8.

The parameter input unit 1 is such as to correspond to an example of the curve information obtaining unit and obtains information such as an expression of a curve, constants of the expression, a line number to be drawn and a width of the curve in relation to an original curve to hold or update the information. The coordinate calculating unit 2 calculates a coordinate to be drawn from the expression of the curve. The horizontal broadening unit 4 implements a calculation of a horizontal width given to the curve. The vertical broadening unit 5 implements a calculation of a vertical width given to the curve, so as to be converted into a horizontal vector. The integrating unit 7 integrates together a result of a calculation by the horizontal broadening unit 4 and a result a calculation by the vertical broadening unit 5. The output unit 8 is such as to output an image signal for display, and outputs an image signal of each pixel to scanning of a display screen and implements a clipping processing which limits a drawing domain.

Next, the operation of the curve drawing apparatus of the second embodiment will be described. Here, it is understood that the same coordinate system as that used in the first embodiment is used. Also in the second embodiment, as with the first embodiment, a curve which is made to have a width relative to an original curve is to be drawn.

Initially, a calculation method of a starting point and a terminal point of a horizontal vector will be described. As with the first embodiment, the original curve is understood to be a parabola (a quadratic curve) which is expressed by an expression (12) below.

$$X = ay^2 + by + c \quad \ldots (12)$$

Here, a, b, c are constants, and values are given by the parameter input unit 1. Broadening by *w* for each side, hence 2*w* for both sides is implemented on this original curve.

Firstly, a horizontal broadening calculation process by the horizontal broadening unit 4 and a vertical broadening calculation process by the vertical broadening unit 5 are implemented individually.

As is shown in Fig. 3, when the original curve is shifted in the horizontal direction by +/- *w*, individual curves are expressed by expressions:

$$x = ay^2 + by + c + w \quad \ldots (13)$$

$$x=ay^2 + by + c - w \qquad \ldots (14)$$

As this occurs, the horizontal broadening unit 4 executes the following operation. In a line in which $y=y_0$, a starting point and a terminal point of a horizontal vector for drawing are calculated in the following manner by the coordinate calculating unit 2.

$$X_1=ay_0^2 + by_0 + c + w \qquad \ldots (15)$$

$$X_2=ay_0^2 + by_0 + c - w \qquad \ldots (16)$$

From the expressions (15), (16), min $(x_1, x_2)$ is obtained as the starting point of the horizontal vector, and max $(x_1, x_2)$ is obtained as the terminal point of the horizontal vector, where min (m, n) means either of m and n whose value is smaller than that of the other, and max (m, n) means either of m and n whose value is larger than that of the other.

As is shown in Fig. 4, when the original curve is shifted in the vertical direction by +/- *w*, individual curves are expressed by expressions:

$$x=a(y-w)^2 + b(y - w) + c \qquad \ldots (17)$$

$$x=a(y+W)^2 + b(y + w) + c \qquad \ldots (18)$$

As this occurs, the vertical broadening unit 5 executes the following operation. In a line in which $y=y_0$, a starting point and a terminal point of a horizontal vector for drawing are calculated in the following manner by the coordinate calculating unit 2.

$$X_3=a(y_0 - w)^2 + b(y_0 - W) + c \qquad \ldots (19)$$

$$X_3=a(y_0 + w)^2 + b(y_0 + W) + c \qquad \ldots (20)$$

From the expressions (19), (20), min $(x_3, x_4)$ is obtained as the starting point of the horizontal vector, and max $(x_3, x_4)$ is obtained as the terminal point of the horizontal vector.

Next, the integrating unit 7 integrates together a result of a calculation by the horizontal broadening unit 4 and a result a calculation by the vertical broadening unit 5. As an integration processing method, for example, a logical sum of a horizontal vector which is calculated by the horizontal broadening unit 4 and a vertical vector which is calculated by the vertical broadening unit 5 is taken. Here, the logical sum means painting completely in a predetermined color pixels contained in either of the calculation results as a section to broaden.

An integrated horizontal vector which is outputted from the integrating unit 7 as a result of the processing carried out in the integrating unit 7 becomes equal to a horizontal vector having min $(x_1, x_2, x_3, x_4)$ as its starting point and max $(x_1, x_2, x_3, x_4)$ as its terminal point. Then, in the output unit 8, by implementing a process of painting completely pixels within the horizontal vector so integrated in a predetermined color, as the whole of a screen for output image signals, a dummy curve of the width 2*w* can be drawn.

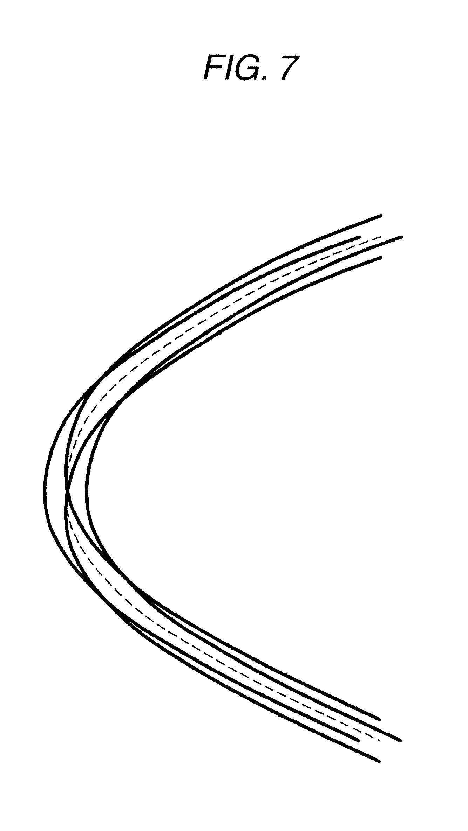

Fig. 7 shows an output example of a drawing drawn by the curve drawing apparatus of the second embodiment. Fig. 7 is such as to result from superposing Fig. 3 on Fig. 4. Portions which lie transversely farthest away from the original curve constitute outer edges, and pixels lying therebetween are completely painted by the output unit 8 so as to be displayed as a thick line.

Thus, according to the curve drawing apparatus of the second embodiment, the curve which is made to have an appropriate width to display scanning can be drawn through the simple operation such as multiplication, addition and subtraction without using a frame buffer.

Note that while in the embodiment, the horizontal broadening amount and the vertical broadening amount are made the same, they can take values which are different from each other. In addition, while the example of the logical sum is shown as the method for integrating together horizontal broadening and vertical broadening, the integrating method is not limited thereto, and the integration can be implemented by use of an arbitrary operation, provided that substantially the same result can be obtained with the operation so used.

In addition, while in the embodiment, the curve is described as being the parabola, the invention can be carried out similarly on an arbitrary curve.

(Third Embodiment)

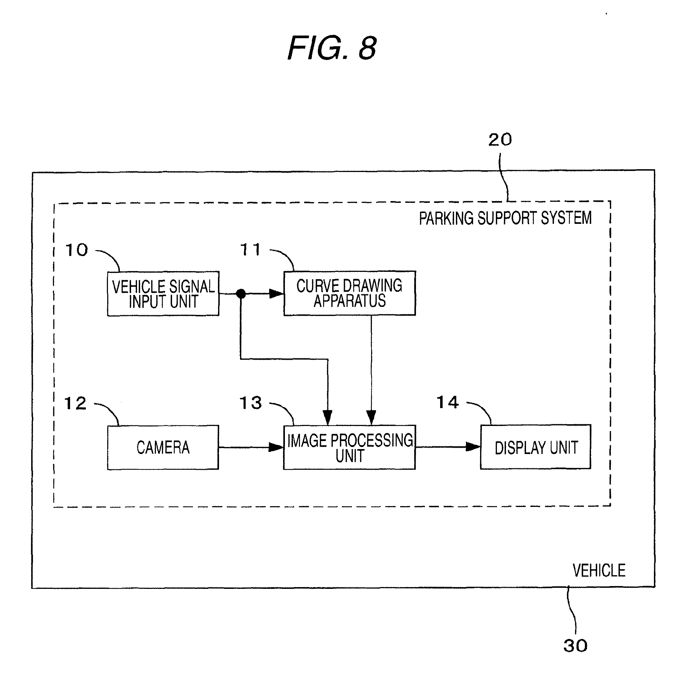

Fig. 8 is a block diagram which shows the configuration of a parking support system according to a third embodiment of the invention. In the third embodiment, a configuration example of a parking support system will be illustrated to which the curve drawing apparatus of the first or second embodiment is applied.

A parking support system 20 of this embodiment is made up of a vehicle signal input unit 10, a curve drawing apparatus 11, a camera 12, an image processing unit 13 and a display unit 14. This parking support system 20 is such as to be provided on a vehicle 30 for use in supporting the driver when he or she attempts to park the vehicle.

The vehicle signal input unit 10 is such as to correspond to an example of the state obtaining unit and obtains information signals from various sensors provided on the vehicle such as a vehicle steering angle sensor, a reverse gear sensor and the like. The curve drawing apparatus 11 is such as to have the configuration shown in Fig. 1 or Fig. 6 and draws an estimated traveling path line which represents in a curve an estimated traveling path of the vehicle which is obtained from a vehicle steering angle. As this occurs, the curve is drawn in a thick line which is made to have an appropriate width relative to the original curve. The camera 12 photographs images of subjects lying on the periphery of the vehicle and outputs image signals. The number of cameras 12 is not limited to one, and hence, a plurality of cameras may be used.

The image processing unit 13 implements various image processings such as strain correction, composition, change in view point and the like on image signals photographed by the camera 12 and superposes the curve drawn by the curve drawing apparatus 11 thereon. The image processing unit 13 can select whether or not an image signal is outputted by an output of, for example, the reverse gear sensor or switch between cameras when there are installed a plurality of cameras. The traveling path drawing unit can be realized by the curve drawing apparatus 11 and the image processing unit 13. The display unit 14 has a display device such as a liquid crystal display and receives image signals which are outputted by the image processing unit 13 for input thereinto, so as to display an image of an object lying in a traveling direction of the vehicle or an estimated traveling path line on a display screen thereof.

According to the parking support system of the embodiment, by utilizing the curve drawing apparatus having the configuration according to the first or second embodiment, the estimated traveling path line (the smooth curve) which links with vehicle steering angle can be displayed without deploying it in a frame buffer. Because of this, the parking support system can be realized which enables the reduction in cost and reduction in size and weight due to a reduction in installation area which both result from using no frame buffer. In addition, since an arbitrary curve can be displayed by giving parameters as appropriately, the conveniences of the user can be enhanced.

In addition, by installing the parking support system of the embodiment on a vehicle, the vehicle can be realized which is equipped with the low-cost, small in size and light in weight parking support system which enables the display of an estimated traveling path line which links with vehicle steering angle without deploying it in a frame buffer.

While the invention has been described in detail and by reference to the specific embodiments, it is obvious to those skilled in the art to which the invention pertains that the various changes and modifications can be made to the invention without departing from the spirit and scope of the invention.

This patent application is such as to be based on the Japanese patent application (No. 2005-165752) filed on June 6, 2005, and the contents thereof are incorporated herein by reference.

<Industrial Applicability>

The invention has the advantage that a curve which is made to have an appropriate width to display scanning can be drawn through the simple calculation process without using a frame buffer and is useful for a curve drawing apparatus and curve drawing method for drawing a curve made to have an appropriate relative to an arbitrary curve and a parking support system and vehicle which utilize the curve drawing apparatus.

**Claims**

1. A curve drawing apparatus comprising:

   a curve information obtaining unit for obtaining information on a curve to be drawn;
   a coordinate calculating unit for obtaining a coordinate to be drawn based on information on the curve;
   a horizontal broadening unit for implementing a horizontal broadening process relative to the coordinate of the curve;
   a vertical broadening unit for implementing a vertical broadening process relative to the coordinate of the curve;
   an inclination calculating unit for calculating an inclination of a tangent to the curve;
   a selecting unit for selecting and switching between a broadening by the horizontal broadening unit and a broadening by the vertical broadening unit based on the inclination of the tangent; and
   an output unit for outputting a result of the selection by the selecting unit as information for drawing the curve.

2. A curve drawing apparatus comprising:

   a curve information obtaining unit for obtaining information on a curve to be drawn;
   a coordinate calculating unit for obtaining a coordinate to be drawn based on information on the curve;
   a horizontal broadening unit for implementing a horizontal broadening process relative to the coordinate of the curve;
   a vertical broadening unit for implementing a vertical broadening process relative to the coordinate of the curve;
   an integrating unit for implementing the integration of broadening by the horizontal broadening unit and broadening by the vertical broadening unit; and
   an output unit for outputting a result of the integration by the integrating unit as information for drawing the curve.

3. A curve drawing method comprising:

   a step of obtaining information on a curve to be drawn;
   a step of obtaining a coordinate to be drawn based on information on the curve;
   a step of implementing a horizontal broadening process relative to the coordinate of the curve;
   a step of implementing a vertical broadening process relative to the coordinate of the curve;
   a step of calculating an inclination of a tangent to the curve;
   a step of selecting and switching between the horizontal broadening and the vertical broadening for implementation on the curve based on the inclination of the tangent; and
   a step of outputting a result of the selection by the selecting unit as information for drawing the curve.

4. A curve drawing method comprising:

   a step of obtaining information on a curve to be drawn; a step of obtaining a coordinate to be drawn based on information on the curve;
   a step of implementing a horizontal broadening process relative to the coordinate of the curve;
   a step of implementing a vertical broadening process relative to the coordinate of the curve;
   a step of integrating the horizontal broadening and the vertical broadening implemented on the curve; and
   a step of outputting a result of the integration as information for drawing the curve.

5. A parking support system which comprises the curve drawing apparatus set forth in Claim 1 or 2, comprising:

   a state obtaining unit for obtaining a state of a vehicle;
   a traveling path drawing unit for drawing an estimated traveling path of the vehicle based on the state of the vehicle by the curve drawing apparatus; and
   a display unit for displaying the estimated traveling path.

6. A vehicle which installs thereon the parking support system set forth in Claim 5.

FIG. 1

EP 1 890 266 A1

# FIG. 2

## FIG. 3

HORIZONTAL WIDTH: 2w

HORIZONTAL WIDTH: 2w

## FIG. 4

VERTICAL WIDTH: 2w

VERTICAL WIDTH: 2w

## FIG. 5

VERTICAL BROADENING SECTION

VERTICAL WIDTH: 2w

HORIZONTAL
WIDTH: 2w

HORIZONTAL BROADENING SECTION

VERTICAL WIDTH: 2w

VERTICAL BROADENING SECTION

# FIG. 6

EP 1 890 266 A1

## FIG. 7

# FIG. 8

**INTERNATIONAL SEARCH REPORT**

| International application No. |
|---|
| PCT/JP2006/310791 |

A.  CLASSIFICATION OF SUBJECT MATTER
*G06T11/20*(2006.01)i

According to International Patent Classification (IPC) or to both national classification and IPC

B.  FIELDS SEARCHED

Minimum documentation searched (classification system followed by classification symbols)
G06T11/00-11/80

Documentation searched other than minimum documentation to the extent that such documents are included in the fields searched
Jitsuyo Shinan Koho          1922-1996   Jitsuyo Shinan Toroku Koho    1996-2006
Kokai Jitsuyo Shinan Koho    1971-2006   Toroku Jitsuyo Shinan Koho    1994-2006

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 11-175740 A  (Fuji Xerox Co., Ltd.), 02 July, 1999 (02.07.99), Full text; all drawings (Family: none) | 1-6 |
| A | JP 7-210696 A  (Tec Co., Ltd.), 11 August, 1995 (11.08.95), Full text; all drawings (Family: none) | 1-6 |
| A | JP 61-183784 A  (Hitachi, Ltd.), 16 August, 1986 (16.08.86), Full text; all drawings (Family: none) | 1-6 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 August, 2006 (21.08.06) | 29 August, 2006 (29.08.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**EP 1 890 266 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8279038 A
- JP 2005165752 A